## Europäisches Patentamt

## European Patent Office

## Office européen des brevets

(19)

(11) Veröffentlichungsnummer: **0 219 002**
**B1**

(12) # EUROPÄISCHE PATENTSCHRIFT

(45) Veröffentlichungstag der Patentschrift:
**22.03.89**

(51) Int. Cl.⁴: **B 60 R 25/02**

(21) Anmeldenummer: **86113588.7**

(22) Anmeldetag: **02.10.86**

(54) Vorrichtung zum Sperren der Drehbewegung einer Kraftfahrzeuglenkspindel.

(30) Priorität: **09.10.85 DE 3535945**

(43) Veröffentlichungstag der Anmeldung:
**22.04.87 Patentblatt 87/17**

(45) Bekanntmachung des Hinweises auf die Patenterteilung:
**22.03.89 Patentblatt 89/12**

(84) Benannte Vertragsstaaten:
**DE ES FR GB IT**

(56) Entgegenhaltungen:
**DE-A- 3 213 719**

(73) Patentinhaber: **NEIMAN, 39 Avenue Marceau,
F-92400 Courbevoie (FR)**

(72) Erfinder: **Weber, Günter, Bergerheide 54,
D-5600 Wuppertal 1 (DE)**
Erfinder: **Gräser, Detlef, Liegnitzer Strasse 26,
D-5600 Wuppertal 1 (DE)**

(74) Vertreter: **Patentanwaltsbüro Cohausz & Florack,
Postfach 14 01 47, D-4000 Düsseldorf 1 (DE)**

ACTORUM AG

## Beschreibung

Die Erfindung betrifft eine Vorrichtung zum Sperren der Drehbewegung einer Lenkspindel eines Kraftfahrzeuges mit durch ein Schloss betätigten Sperriegeln, die in der sperrenden Stellung in regelmässigen Ausnehmungen der Lenkspindel einliegen, und mit zwischen den Ausnehmungen befindlichen Vorsprüngen, die sperrende Seitenflächen für die Sperriegel bilden, wobei die Sperriegel im sperrenden Bereich voneinander einen Abstand haben, der mindestens der Breite eines Vorsprungs ist.

Eine entsprechende Vorrichtung ist aus der deutschen Patentschrift 32 13 719 bekannt. Diese bekannte Vorrichtung sorgt dafür, dass bei jeder Winkelstellung der Lenkspindel zumindest ein Sperriegel in einer Ausnehmung der Lenkspindel einliegt, so dass in jeder Stellung der Lenkspindel ein Sperren der Drehbewegung erfolgt. Auch ist es bei dieser Vorrichtung bereits bekannt, mehr als zwei Sperriegel zu verwenden. Bei dieser bekannten Vorrichtung muss unterschieden werden zwischen Stellungen, bei denen ein Sperriegel sperrend einliegt und der andere noch auf einem Vorsprung aufliegt um nach einer geringen Drehbewegung der Lenkspindel einzurasten, und Stellungen, bei denen zwei Sperriegel sperrend einliegen und damit keine Drehbewegung der Lenkspindel mehr zulassen. Es hat sich gezeigt, dass ein Bedarf danach besteht, die letztere, absolut sperrende Stellung möglichst häufig über den Umfang der Lenkspindel zu erhalten, um damit die Sicherheit zu erhöhen.

Aufgabe der Erfindung ist es, eine Vorrichtung der eingangs genannten Art derart zu verbessern, dass die Anzahl der Stellungen der Lenkspindel erhöht wird, bei denen die Sperriegel die Lenkspindel so blockieren, dass eine Drehbewegung nicht mehr möglich ist.

Diese Aufgabe wird erfindungsgemäss dadurch gelöst, dass in dem zwischen zwei Sperriegeln vorgesehenen, die Breite eines Vorsprungs aufweisenden Abstand ein dritter Sperriegel verschieblich angeordnet ist.

Bei einer solchen Vorrichtung genügt es, dass von den drei oder mehr Sperriegeln zwei in eine Ausnehmung der Lenkspindel bzw. einer auf der Lenkspindel befindlichen Buchse einfallen um die Lenkspindel an jeglicher Drehbewegung selbst über wenige Winkelgrade zu hindern. Damit wird bei gleichbleibender Anzahl der Lenkspindelausnehmungen die Anzahl der Drehstellungen der Lenkspindel wesentlich erhöht, bei denen ein vollständiges Blockieren erfolgt. Darüber hinaus baut eine solche Vorrichtung in axialer und radialer Richtung erheblich kleiner.

Besonders vorteilhaft ist es, wenn der dritte Sperriegel zur Lenkspindel radial angeordnet ist. Eine sehr kleine Bauweise wird dann erzielt, wenn die Sperriegel zueinander parallel sind. Eine Selbsthemmung in allen Stellungen wird dann erreicht, wenn alle Sperriegel radial zur Lenkspindel angeordnet sind.

Eine Vereinfachung der Herstellung als auch eine kleine Bauweise wird dann erzielt, wenn alle Sperriegel zumindest mit den in die Ausnehmungen einliegbaren Bereichen jeweils dieselbe Breite aufweisen, der Breite des Vorsprungs entspricht. Auch sollte die Gesamtbreite zweier nebeneinanderliegender Sperriegel gleich der Breite einer Ausnehmung sein. Zum Erreichen einer absoluten Sperrung der Lenkspindel wird vorgeschlagen, dass in der sperrenden Stellung zwei Sperriegel in derselben Ausnehmung oder in zwei benachbarten Ausnehmungen einliegen und der dritte Sperriegel auf einem Vorsprung nicht sperrend aufliegt.

Eine Erhöhung der Sicherheit wird dann erreicht, wenn mehr als drei Sperriegel nebeneinander angeordnet sind. Eine Selbsthemmung und höhere Sicherheit, insbesondere bei parallel nebeneinanderliegenden Sperriegeln wird dann erreicht, wenn die Sperriegel durch ein Sperrteil, insbesondere eine Querplatte in der sperrenden Stellung feststellbar sind. Hierbei kann das Sperrteil durch eine vom Lenkschloss bewegbaren Kurve steuerbar sein.

Ein Ausführungsbeispiel der Erfindung ist in den Zeichnungen dargestellt und wird im folgenden näher beschrieben. Es zeigen:

Fig. 1 einen Querschnitt durch eine auf einer Lenkspindel befestigbaren Buchse mit auf dem Umfang regelmässigen Abständen angeordneten Ausnehmungen, wobei zwei Sperriegel in unterschiedlichen Ausnehmungen einliegen und ein dazwischen befindlicher Sperriegel auf einem Vorsprung aufsitzt,

Fig. 2 einen Ausschnitt aus Fig. 1 mit zwei Sperriegeln, die in einer Ausnehmung einliegen und einem daneben angeordneten Sperriegel, der auf einem Vorsprung aufsitzt,

Fig. 3 eine Seitenansicht eines Sperriegels in nicht sperrender Stellung,

Fig. 4 eine Seitenansicht eines Sperriegels in nicht sperrender Stellung,

Fig. 5 eine Ansicht nach V-V in Fig. 3 und

Fig. 6 eine Ansicht nach VI-VI in Fig. 4.

Auf einer rohrförmigen, nicht dargestellten Lenkspindel eines Kraftfahrzeuges ist eine koaxiale Buchse 1 aussen drehfest aufgeschweisst, die auf ihrem zylindrischen Umfang axiale rippenförmige Vorsprünge 2 in regelmässigem Abstand trägt. Jeder rippenförmige Vorsprung 2 weist zwei radiale Seitenflächen 3 auf, die gleichzeitig die Seitenflächen der zwischen den Vorsprüngen befindlichen Ausnehmungen 4 darstellen.

Seitlich neben der Buchse 1 sind drei plattenförmige Sperriegel 5a-5c längsverschieblich parallel aneinanderliegend befestigt, deren Seitenflächen parallel zur Lenkspindelachse sind und wobei der mittlere Sperriegel 5b radial angeordnet ist. Die Sperriegel weisen zumindest mit den in die Ausnehmungen 4 einliegbaren Bereichen eine Breite bzw. Dicke B auf, die gleich der halben Breite b der Ausnehmung in Umfangsrichtung ist. Ferner ist die Breite B gleich der Breite der Vorsprünge 2, d.h. gleich der Abstände der Seitenflächen 3 voneinander im Bereich eines Vorsprungs.

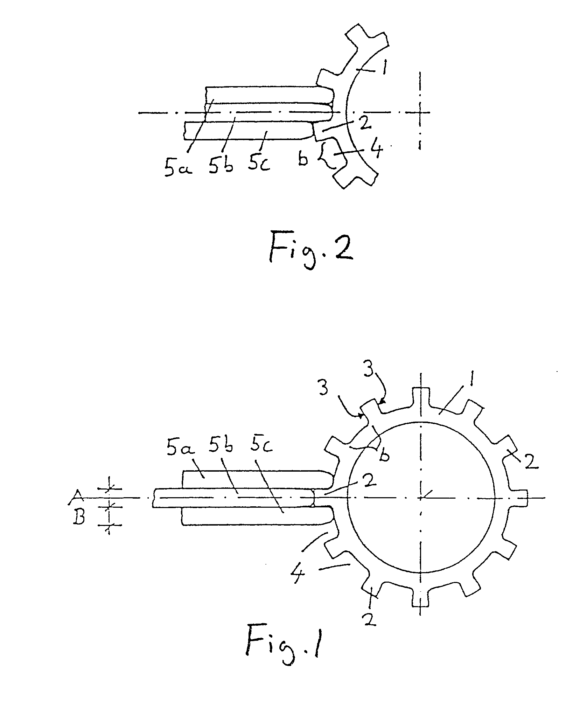

In der sperrenden Stellung liegt stets einer der drei Sperriegel auf, der Stirnfläche eines Vorsprungs 2 auf und die beiden anderen Sperriegel liegen in einer Ausnehmung 4 ein. Bei der in Fig. 1 dargestellten Stellung liegt der mittlere Sperriegel 5b nicht sperrend auf einem Vorsprung 2 auf, und die beiden anderen Sperriegel liegen in zwei benachbarten Ausnehmungen 4 ein. Dagegen liegen bei der in Fig. 2 dargestellten Sperrstellung zwei nebeneinanderliegende Sperriegel 5a und 5b in derselben Ausnehmung 4 ein, und der dritte seitlich liegende Sperriegel 5c liegt auf einem Vorsprung 2 auf. Nur über wenige Drehwinkelgrade kommen Lenkspindelstellungen zustande, bei denen diese beiden sperrenden Stellungen nicht erreicht werden, aber auch dann ist zumindest ein Sperriegel in einer Ausnehmung 4 eingefallen, so dass eine nicht sperrende Stellung nicht existiert.

Im Ausführungsbeispiel sind die Sperriegel zueinander parallel angeordnet. Alternativ können aber auch alle drei Sperriegel mit ihren Mittelebenen radial zur Lenkspindel sein. Auch können mehr als drei Sperriegel nebeneinander angeordnet sein.

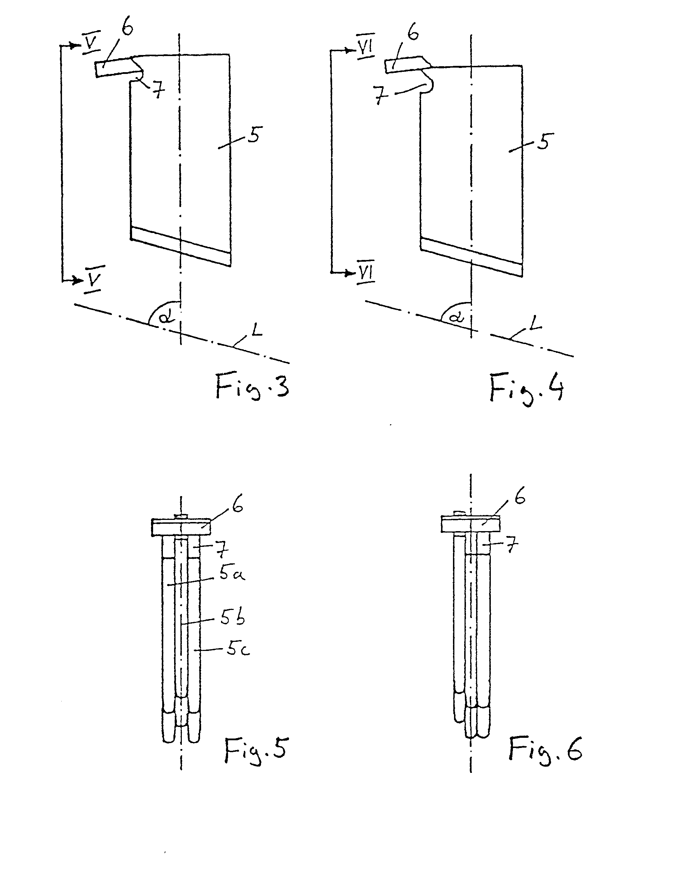

Insbesondere in dem Fall, in dem die Sperriegel nicht selbsthemmend einliegen, kann ein Sperrteil 6, z. B. eine Querplatte oder mehrere Sperrteile vorgesehen sein, das in der sperrenden Stellung die Sperriegel festhält, siehe Fig. 4 und 6. Hierzu liegt das Sperrteil 6 an der Rückseite der Sperriegel 5a, 5b, 5c an. Um die Sperriegel in der nicht sperrenden Stellung zu halten (u.a. in der Sperrbereitschaftsstellung) greift das Sperrteil 6 in eine seitliche Ausnehmung 7 der Sperriegel ein, Fig. 3 und 5.

Dieses Sperrteil 6 kann durch eine vom Lenkschloss bewegbare nicht dargestellte Kurve steuerbar sein. Diese Kurve kann auf einer Verlängerung des Zylinderkerns befestigt sein. Ferner können die Sperriegel 5a, 5b, 5c statt einer Plattenform hebelförmig oder bolzenförmig ausgeführt sein. Aus den Fig. 3 bis 6 wird auch deutlich, dass die Sperriegel zwar in einer radialen Ebene oder parallel dazu liegen können, aber ihre Längs- und Bewegungsrichtung in einem Winkel α schräg zur Achse L der Lenksäule verläuft.

## Patentansprüche

1. Vorrichtung zum Sperren der Drehbewegung einer Lenkspindel eines Kraftfahrzeuges mit durch ein Schloss betätigten Sperriegeln (5a, 5b, 5c), die in der sperrenden Stellung in regelmässigen Ausnehmungen der Lenkspindel einliegen, und mit zwischen den Ausnehmungen (4) befindlichen Vorsprüngen (2), die sperrende Seitenflächen (3) für die Sperriegel bilden, wobei die Sperriegel im sperrenden Bereich voneinander einen Abstand haben, der mindestens der Breite eines Vorsprungs ist, dadurch gekennzeichnet, dass in dem zwischen zwei Sperriegeln (5a, 5c) vorgesehenen, die Breite eines Vorsprungs aufweisenden Abstand (A) ein dritter Sperriegel (5b) verschieblich angeordnet ist.

2. Vorrichtung nach Anspruch 1, dadurch gekennzeichnet, dass der dritte Sperriegel (5b) zur Lenkspindel radial angeordnet ist.

3. Vorrichtung nach einem der vorherigen Ansprüche, dadurch gekennzeichnet, dass die Sperriegel (5a, 5b, 5c) zueinander parallel sind.

4. Vorrichtung nach einem der Ansrpüche 1 oder 2, dadurch gekennzeichnet, dass alle Sperriegel radial zur Lenkspindel angeordnet sind.

5. Vorrichtung nach einem der vorherigen Ansprüche, dadurch gekennzeichnet, dass alle Sperriegel (5a, 5b, 5c) zumindest mit den in die Ausnehmungen (4) einliegbaren Bereichen jeweils dieselbe Breite (B) aufweisen, die der Breite des Vorsprungs (2) entspricht.

6. Vorrichtung nach einem der vorherigen Ansprüche, dadurch gekennzeichnet, dass die Gesamtbreite zweier nebeneinanderliegender Sperriegel (5a, 5b, 5c) gleich der Breite (b) einer Ausnehmung (4) ist.

7. Vorrichtung nach einem der vorherigen Ansprüche, dadurch gekennzeichnet, dass in der sperrenden Stellung zwei Sperriegel (5a, 5b bzw. 5a, 5c) in derselben Ausnehmung (4) oder in zwei benachbarten Ausnehmungen (4) einliegen und der dritte Sperriegel (5c bzw. 5b) auf einem Vorsprung (2) nicht sperrend aufliegt.

8. Vorrichtung nach einem der vorherigen Ansprüche, dadurch gekennzeichnet, dass mehr als drei Sperriegel nebeneinander angeordnet sind.

9. Vorrichtung nach einem der vorherigen Ansprüche, dadurch gekennzeichnet, dass die Sperriegel (5a, 5b, 5c) durch ein Sperrteil (6), insbesondere eine Querplatte in der sperrenden Stellung feststellbar sind.

10. Vorrichtung nach Anspruch 9, dadurch gekennzeichnet, dass die Sperriegel (5a, 5b, 5c) durch ein Sperrteil (6) in der nicht sperrenden Stellung haltbar sind.

11. Vorrichtung nach Anspruch 9 oder 10, dadurch gekennzeichnet, dass das Sperrteil (6) durch eine vom Lenkschloss bewegbaren Kurve steuerbar ist.

## Claims

1. Apparatus for arresting the rotating movement of a steering shaft of a motor vehicle with arresting bolts (5a, 5b, 5c) which are actuated by a lock and, in the arresting position, are inserted in regular recesses in the steering shaft and with projections (2) which are located between the recesses (4) and form arresting side faces (3) for the arresting bolts, the arresting bolts being spaced apart in the arresting region by at least the width of a projection, characterised in that a third arresting bolt (5b) is movably arranged between two arresting bolts (5a, 5c) in the interval (A) which is provided between two arresting bolts (5a, 5c) and has the width of a projection.

2. Apparatus according to claim 1, characterised in that the third arresting bolt (5b) is arranged radially to the steering shaft.

3. Apparatus according to one of the preceding claims, characterised in that the arresting bolts (5a, 5b, 5c) are parallel to one another.

4. Apparatus according to one of claims 1 or 2, characterised in that all arresting bolts are arranged radially to the steering shaft.

5. Apparatus according to one of the preceding claims, characterised in that all arresting bolts (5a, 5b, 5c) have the same width (B) in each case, corresponding to the width of the projection (2), at least in the regions which can be inserted into the recesses (4).

6. Apparatus according to one of the preceding claims, characterised in that the total width of two adjacent arresting bolts (5a, 5b, 5c) is equal to the width (b) of a recess (4).

7. Apparatus according to one of the preceding claims, characterised in that, in the arresting position, two arresting bolts (5a, 5b or 5a, 5c) are inserted in the same recess (4) or in two adjacent recesses (4) and the third arresting bolt (5c or 5b) rests in non-arresting manner on a projection (2).

8. Apparatus according to one of the preceding claims, characterised in that more than three arresting bolts are arranged next to one another.

9. Apparatus according to one of the preceding claims, characterised in that the arresting bolts (5a, 5b, 5c) can be secured in the arresting position by an arresting member (6), in particular a transverse plate.

10. Apparatus according to claim 9, characterised in that the arresting bolts (5a, 5b, 5c) can be held in the non-arresting position by an arresting member (6).

11. Apparatus according to claim 9 or 10, characterised in that the arresting member (6) is controllable by a cam which can be moved by the steering-column lock.

## Revendications

1. Dispositif de blocage de la rotation d'un arbre de direction d'un véhicule automobile, avec des pênes de verrouillage (5a, 5b, 5c) actionnés par une serrure qui, dans la position de verrouillage, sont logés dans des évidements réguliers de l'arbre de direction, et avec des saillies (2) se trouvant entre les évidements (4) qui forment des surfaces latérales (3) de blocage pour les pênes de verrouillage, les pênes de verrouillage ayant entre eux, dans la zone de blocage, un écartement qui est au moins la largeur d'une saillie, caractérisé par le fait qu'un troisième pêne de verrouillage (5b) est disposé coulissant dans l'écartement (A) prévu entre deux pênes de verrouillage (5a, 5c) et présentant la largeur d'une saillie.

2. Dispositif selon la revendication 1, caractérisé par le fait que le troisième pêne de verrouillage (5b) est disposé radial à l'arbre de direction.

3. Dispositif selon l'une des revendications précédentes, caractérisé par le fait que les pênes de verrouillage (5a, 5b, 5c) sont parallèles les uns aux autres.

4. Dispositif selon l'une des revendications 1 et 2, caractérisé par le fait que tous les pênes de verrouillage sont disposés radialement à l'arbre de direction.

5. Dispositif selon l'une des revendications précédentes, caractérisé par le fait que tous les pênes de verrouillage (5a, 5b, 5c) présentent chacun, au moins dans les zones logées dans les évidements (4), la même largeur (B) qui correspond à la largeur de la saillie (2).

6. Dispositif selon l'une des revendications précédentes, caractérisé par le fait que la largeur totale de deux pênes de verrouillage (5a, 5b, 5c) se trouvant l'un à côté de l'autre est égale à la largeur (b) d'un évidement (4).

7. Dispositif selon l'une des revendications précédentes, caractérisé par le fait que, dans la position de blocage, deux pênes de verrouillage (5a, 5b ou 5a, 5c) sont logés dans le même évidement (4) ou dans deux évidements (4) adjacents et le troisième pêne de verrouillage (5c ou 5b) est appuyé sur une saillie (2) sans bloquer.

8. Dispositif selon l'une des revendications précédentes, caractérisé par le fait que plus de trois pênes de verrouillage sont disposés les uns à côté des autres.

9. Dispositif selon l'une des revendications précédentes, caractérisé par le fait que les pênes de verrouillage (5a, 5b, 5c) peuvent être fixés en position de verrouillage par une pièce de verrouillage (6), en particulier une plaque transversale.

10. Dispositif selon la revendication 9, caractérisé par le fait que les pênes de verrouillage (5a, 5b, 5c) peuvent être maintenus en position de non-verrouillage par une pièce de verrouillage (6).

11. Dispositif selon la revendication 9 ou 10, caractérisé par le fait que la pièce de verrouillage (6) peut être commandée par une came déplaçable par la serrure de direction.

EP 0 219 002 B1

Fig. 2

Fig. 1

Fig.3

Fig.4

Fig.5

Fig.6